# EUROPEAN PATENT APPLICATION

(11) **EP 2 367 188 A2**
(43) Date of publication of application: **21.09.2011**
(21) Application number: 11250020.2
(22) Date of filing: 11.01.2011
(51) Int. Cl.: H01G 9/20

(54) **Photoelectric conversion module**

(30) Priority: 15.03.2010 KR 20100022942
(71) Applicant: Samsung SDI Co., Ltd., Yongin-si, Gyeonggi-do (KR)
(72) Inventor: Yang, Nam-Choul , Samsung SDI Co.Ltd., Yongin-si, Gyeonggi-do (KR)
(74) Representative: Mounteney, Simon James

(57) **Abstract**

A photoelectric conversion module includes first and second substrates on which first and second electrodes are respectively formed and which are disposed to face each other; an electrolyte injected through an electrolyte inlet formed in the first substrate, and filled between the first and second substrates; and a conductive sealing member for sealing the electrolyte inlet and electrically connected to at least one of the first and second electrodes. As such and according to an embodiment of the present invention, the photoelectric conversion module has a simple structure and/or may be easily mounted.

## Description

### BACKGROUND

### 1. Field

The present invention relates to a photoelectric conversion module, and more particularly, to a photoelectric conversion module having a simple structure and capable of being easily mounted.

### 2. Description of the Related Art

Recently, various photoelectric conversion modules for converting light energy into electric energy (e.g., solar batteries for obtaining electric energy from sunlight) that may replace fossil fuel as an energy source have been researched.

From among the solar batteries with various operation principles, wafer-type silicon or crystalline solar batteries using p-n junctions of semiconductors are the most popular but require high manufacturing costs to form and process high purity semiconductor materials.

Unlike a silicon solar battery, a dye-sensitive solar battery includes a photosensitive dye that receives light having a wavelength in the visible range and generates excited electrons, a semiconductor material that receives the excited electrons, and an electrolyte that reacts with electrons returning from an external circuit. The dye-sensitive solar battery has much higher photoelectric conversion efficiency than general solar batteries and thus is regarded as a next-generation solar battery.

### SUMMARY

One or more aspects of one or more embodiments of the present invention are directed toward a photoelectric conversion module having a simple structure and capable of being easily mounted.

Additional aspects will be set forth in part in the description which follows and, in part, will be apparent from the description, or may be learned by practice of the presented embodiments.

According to one or more embodiments of the present invention, a photoelectric conversion module includes first and second substrates on which first and second electrodes are respectively formed and which are disposed to face each other; an electrolyte injected through an electrolyte inlet formed in the first substrate, and filled between the first and second substrates; and a conductive sealing member for sealing the electrolyte inlet and electrically connected to at least one of the first and second electrodes.

In one embodiment, the first and second electrodes are between the first and second substrates, and the conductive sealing member is configured to extend across an outer surface of the first substrate, to surround an edge of a corner of the first substrate, and to extend between the first and second substrates.

In one embodiment, the conductive sealing member includes: a sealing unit extending across the first substrate to cover the electrolyte inlet; and a connection unit at one end of the sealing unit and bent to surround an edge of a corner of the first substrate in a form of a clip.

In one embodiment, the photoelectric conversion module further includes another sealing member disposed along edge portions of the first and second substrates to define one or more photoelectric cells. Here, at least one of the first and second electrodes may include a current collecting terminal unit protruding out of the other sealing member from the one or more photoelectric cells, and may be electrically connected to the conductive sealing member via the current collecting terminal unit.

In one embodiment, a plurality of photoelectric cells are between the first and second substrates, and a plurality of electrolyte inlets are in the first substrate to correspond to the plurality of photoelectric cells, the plurality of electrolyte inlet including the electrolyte inlet. The conductive sealing member may include: a first conductive sealing member for sealing a first row of the plurality of electrolyte inlets; and a second conductive sealing member for sealing a second row of the plurality of electrolyte inlets. The first conductive sealing member may be electrically connected to the first electrode, and the second conductive sealing member may be electrically connected to the second electrode. In one embodiment, the photoelectric conversion module further includes another sealing member disposed along edge portions of the first and second substrates to define one or more photoelectric cells, and the first and second electrodes respectively include first and second current collecting terminal units protruding out of the other sealing member from the one or more photoelectric cells. The first and second conductive sealing members may be respectively and electrically connected to the first and second electrodes via the first and second current collecting terminal units. The first and second current collecting terminal units may be disposed at opposite sides of the sealing member.

In one embodiment, the conductive sealing member includes a conductive layer and an adhesive layer, the conductive layer and the adhesive layer being stacked on one another. The conductive layer may be a thin metal plate.

According to one or more embodiments of the present invention, a photoelectric conversion module includes first and second substrates disposed to face each other; a first sealing member disposed along edges of the first and second substrates to define one or more photoelectric cells; first and second electrodes respectively formed on the first and second substrates and respectively including first and second current collecting terminal units protruding out of the sealing member from the one or more photoelectric cells; electrolyte inlets formed in the first substrate; and first and second conductive sealing members extending across the first substrate so as to cover the electrolyte inlets, and each having one end respectively and electrically connected to the first and second current collecting terminal units.

In one embodiment, the first and second conductive sealing members are respectively connected to the first and second current collecting terminal units formed at opposite sides of the first sealing member.

In one embodiment, the first and second current collecting terminal units are between the first and second substrates. Here, the first and second conductive sealing members are configured to extend across an outer surface of the first substrate and to surround edges of corners of the first substrate, and are electrically connected to the first and second current collecting terminal units between the first and second substrates.

In one embodiment, each of the first and second conductive sealing members includes: a sealing unit extending across the first substrate to cover at least one of the plurality of electrolyte inlets; and a connection unit at one end of the sealing unit and bent to surround an edge of a corner of the first substrate in a form of a clip.

In one embodiment, a plurality of photoelectric cells are in an internal space surrounded by the first sealing member, and the plurality of electrolyte inlets are formed to correspond to the plurality of photoelectric cells.

In one embodiment, the first conductive sealing member is configured to extend on a first row of the plurality of electrolyte inlets, and the second conductive sealing member is configured to extend on a second row of the plurality of electrolyte inlets.

In one embodiment, each of the first and second conductive sealing members includes a conductive layer and an adhesive layer, the conductive layer and the adhesive layer being stacked on one another.

At least some of the above and other features of the invention are set out in the claims.

### BRIEF DESCRIPTION OF THE DRAWINGS

The accompanying drawings, together with the description, illustrate embodiments of the present invention, and, together serve to explain the principles of the present invention.

FIG. 1 is a plan view of a photoelectric conversion module according to an embodiment of the present invention;

FIG. 2 is a cross-sectional view taken along a line II-II' illustrated in FIG. 1;

FIG. 3 is a cross-sectional view taken along a line III-III' illustrated in FIG. 1;

FIG. 4 is a cross-sectional view taken along a line IV-IV' illustrated in FIG. 1;

FIG. 5 is an exploded perspective view of the photoelectric conversion module illustrated in FIG. 1;

FIG. 6 is a perspective view showing a connection between a first conductive sealing member and a first current collecting terminal unit of the photoelectric conversion module illustrated in FIG. 1; and

FIG. 7 is a perspective view showing a connection between a second conductive sealing member and a second current collecting terminal unit of the photoelectric conversion module illustrated in FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

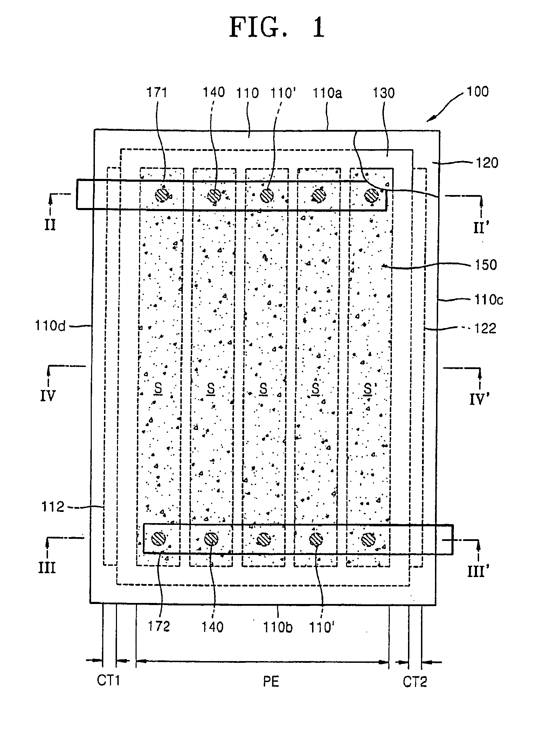

FIG. 1 is a plan view of a photoelectric conversion module 100 according to an embodiment of the present invention. Referring to FIG. 1, the photoelectric conversion module 100 includes a plurality of photoelectric cells S, and a sealing member (or a first sealing member) 130 is disposed between neighboring photoelectric cells S so as to define the photoelectric cells S. For example, each photoelectric cell S forms a serial connection or a parallel connection with neighboring photoelectric cells S via connection members, and is physically supported between a light-receiving substrate 110 and a counter substrate 120, thereby forming a module.

An electrolyte 150 is filled in the photoelectric cells S and is sealed by the sealing member 130 that is formed along edge portions (or at along edges) of the photoelectric conversion module 100 and between neighboring photoelectric cells S. The sealing member 130 is formed around the electrolyte 150 so as to surround the electrolyte 150, and seals the electrolyte 150 so that the electrolyte 150 does not leak.

The light-receiving substrate 110 may be formed in a substantially rectangular shape to have first and second short sides 110a and 110b extending in parallel, and first and second long sides 110c and 110d extending in parallel and perpendicular to the first and second short sides 110a and 110b. Electrolyte inlets 110' for injecting an electrolyte may be formed in the light-receiving substrate 110. The electrolyte inlets 110' are formed in the light-receiving substrate 110 to correspond to the photoelectric cells S. For example, a pair of electrolyte inlets 110' may be formed to correspond to each photoelectric cell S. In one embodiment, after the electrolyte 150 is completely injected, first and second conductive sealing members 171 and 172 for covering the electrolyte inlets 110' are attached on the light-receiving substrate 110, and the electrolyte inlets 110' are sealed by the first and second conductive sealing members 171 and 172 extending along the first and second short sides 110a and 110b on rows of the electrolyte inlets 110'.

According to an embodiment of the present invention, the electrolyte inlets 110' may double-seal the electrolyte 150 by using the first and second conductive sealing members 171 and 172 assembled on the light-receiving substrate 110, together with fillers 140 filled in the electrolyte inlets 110'. The first and second conductive sealing members 171 and 172 may be respectively disposed adjacent to opposite sides of the light-receiving substrate 110, e.g., the first conductive sealing member 171 is at the first short side 110a and the second conductive sealing member 172 is at the second short side 110b. The first and second conductive sealing members 171 and 172 respectively extend along the first and second short sides 110a and 110b of the light-receiving substrate 110. The first and second conductive sealing members 171 and 172 respectively extend from the first long side 110c to the second long sides 110d (or vice versa), the first and second long sides 110c and 110d being respectively contacted to the first and second short sides 110a and 110b, and the first and second conductive sealing members 171 and 172 are respectively and electrically connected to first and second current collecting terminal units 112 and 122 in first and second terminal regions CT1 and CT2.

The light-receiving substrate 110 and the counter substrate 120, which overlap each other, include a photoelectric region PE in which the photoelectric cells S are arranged, and the first and second terminal regions CT1 and CT2 formed outside the photoelectric region PE. The photoelectric region PE and the first and second terminal regions CT1 and CT2 may be defined by the sealing member 130 formed along the edge portions of the light-receiving substrate 110. The first and second current collecting terminal units 112 and 122 are respectively connected to the first and second conductive sealing members 171 and 172 so as to transmit an output generated due to photoelectric conversion to an external circuit. For example, in one embodiment, the first and second current collecting terminal units 112 and 122 are respectively disposed adjacent to opposite sides of the light-receiving substrate 110, e.g., respectively disposed at the first and second long sides 110c and 110d. The first and second conductive sealing members 171 and 172 may be respectively and electrically connected to the first and second current collecting terminal units 112 and 122.

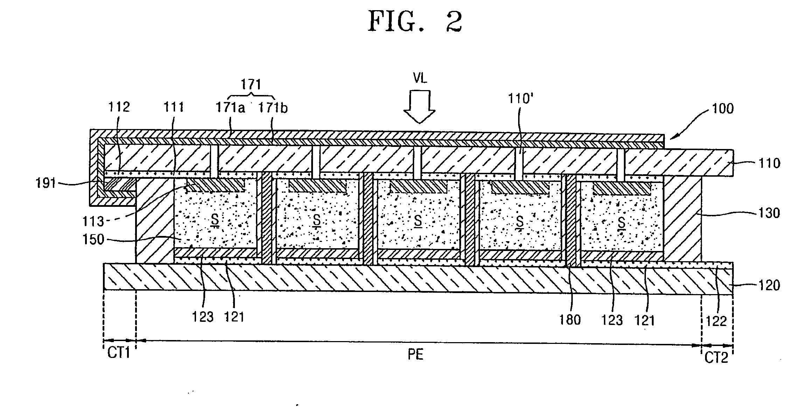

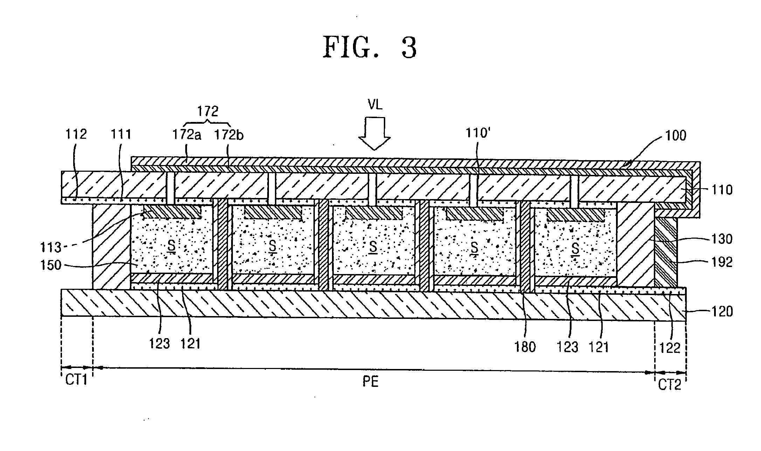

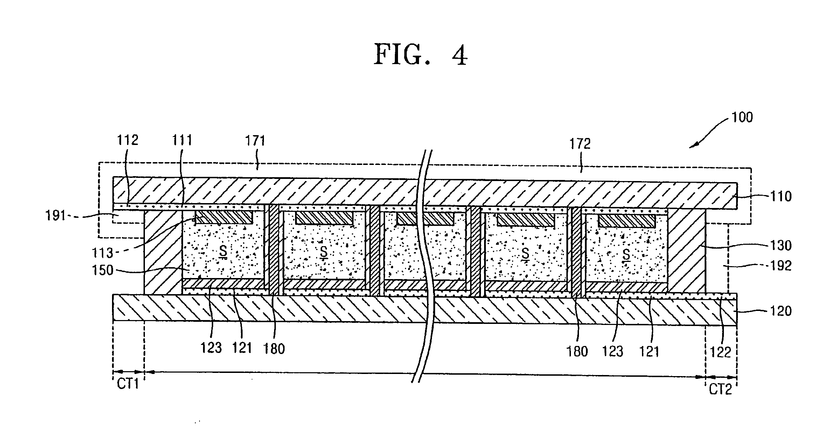

FIG. 2 is a cross-sectional view taken along a line II-II' illustrated in FIG. 1. FIG. 3 is a cross-sectional view taken along a line III-III' illustrated in FIG. 1. In FIGS. 2 and 3, the fillers 140 filled in the electrolyte inlets 110' are not illustrated. FIG. 4 is a cross-sectional view taken along a line IV-IV' illustrated in FIG. 1.

Referring to FIGS. 2 through 4, the photoelectric conversion module 100 includes the light-receiving substrate 110 and the counter substrate 120, which face each other, and the photoelectric cells S defined by the sealing member 130 are formed between the light-receiving substrate 110 and the counter substrate 120. Connection members 180 are formed between neighboring photoelectric cells S so as to connect the neighboring photoelectric cells S to each other. For example, the connection members 180 may connect the photoelectric cells S in series.

Photoelectrodes 111 and counter electrodes 121 are respectively formed on the light-receiving substrate 110 and the counter substrate 120 that are bonded to each other with a gap by interposing (intervening) the sealing member 130 therebetween. The first and second terminal regions CT1 and CT2 are formed at sides of the light-receiving substrate 110 and the counter substrate 120 which are bonded to face each other. Referring to FIGS. 2 and 3, the first and second current collecting terminal units 112 and 122 exposed outside the sealing member 130 are respectively formed on the first and second terminal regions CT1 and CT2.

For example, the first and second current collecting terminal units 112 and 122 are respectively formed on the light-receiving substrate 110 and the counter substrate 120, and are respectively and electrically connected to the photoelectrodes 111 of the light-receiving substrate 110 and the counter electrodes 121 of the counter substrate 120. For example, the first current collecting terminal unit 112 is formed by extending (protruding) a portion of the photoelectrodes 111 formed on the light-receiving substrate 110 to be out of the sealing member 130 (see FIG. 2) from a photoelectric cell S defined by the sealing member 130, and the second current collecting terminal unit 122 is formed by extending (protruding) a portion of the counter electrodes 121 formed on the counter substrate 120 to be out of the sealing member 130 (see FIG. 3) from a photoelectric cell S defined by the sealing member 130. According to another embodiment of the present invention, the first and second current collecting terminal units 112 and 122 may be independent members separated from the photoelectrodes 111 and the counter electrodes 121, and may be respectively and electrically connected to the photoelectrodes 111 and the counter electrodes 121.

The first and second current collecting terminal units 112 and 122 are respectively and electrically connected to the first and second conductive sealing members 171 and 172 for covering and sealing the electrolyte inlets 110'. For example, the first and second conductive sealing members 171 and 172 extend across the light-receiving substrate 110, are each bent to surround a corner portion (e.g., an edge of a corner) of the light-receiving substrate 110, and are respectively connected to the first and second current collecting terminal units 112 and 122.

The first and second conductive sealing members 171 and 172 may respectively include first and second conductive layers 171 a and 172a functioning as power transmission lines, and first and second adhesive layers 171 b and 172b providing adhesion on the light-receiving substrate 110. For example, in one embodiment, the first and second conductive layers 171 a and 172a are formed of thin metal plates such as aluminum (AI) and/or titanium (Ti) thin plates, and the first and second adhesive layers 171 b and 172b are formed of a polyolefin derivative and/or a polyolefin-acrylic acid derivative.

First and second connection members 191 and 192 may be respectively intervened (interposed) between the first and second current collecting terminal units 112 and 122 and the first and second conductive sealing members 171 and 172 so as to provide electrical connection therebetween. For example, in one embodiment, the first and second connection members 191 and 192 are in the form of anisotropic conductive films that are intervened and pressed so as to provide electrical connection. As illustrated in FIGS. 2 and 3, the first and second connection members 191 and 192, which provide connection between the first current collecting terminal unit 112 formed on the light-receiving substrate 110 and the second current collecting terminal unit 122 formed on the counter substrate 120, may have different heights.

Semiconductor layers 113 that absorb a photosensitive dye to be excited by light VL are formed on the photoelectrodes 111, and the electrolyte 150 is intervened between the semiconductor layers 113 and the counter electrodes 121.

The light-receiving substrate 110 may be formed of a transparent material having a high light transmittance. For example, in one embodiment, the light-receiving substrate 110 is a glass substrate and/or a resin film. A resin film generally has flexibility and thus is appropriate for when nonrigidity is required.

The photoelectrodes 111 function as negative electrodes of the photoelectric conversion module 100, and receive electrons generated due to photoelectric conversion so as to provide a current path. The light VL that is incident through the photoelectrodes 111 functions as an excitation source of the photosensitive dye absorbed by the semiconductor layers 113. The photoelectrodes 111 may be formed of transparent conductive oxide (TCO) having electrical conductivity and transparency, e.g., indium tin oxide (ITO), fluorine tin oxide (FTO) and/or antimony tin oxide (ATO). The photoelectrodes 111 may further include metal electrodes having a relatively high electrical conductivity, e.g., gold (Au), silver (Ag) and/or aluminum (Al) electrodes. The metal electrodes are used to reduce the electrical resistance of the photoelectrodes 111 and may be formed in a stripe pattern or a mesh pattern.

The semiconductor layers 113 may be formed of a semiconductor material used to form a general photoelectric conversion module, e.g., metal oxide such as cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si) and/or chromium (Cr) oxide. The semiconductor layers 113 may absorb the photosensitive dye so as to increase photoelectric conversion efficiency. For example, the semiconductor layers 113 may be formed by coating a paste, in which semiconductor particles having diameters of about 5 nm to about 1000 nm are dispersed, on the light-receiving substrate 110 on which the photoelectrodes 111 are formed, and heating and/or pressing the paste by applying a certain degree of heat and/or pressure.

The photosensitive dye absorbed by the semiconductor layers 113 absorbs the light VL that is incident through the light-receiving substrate 110, and electrons of the photosensitive dye are excited from a base state to an excitation state. The excited electrons are transferred to a conduction band of the semiconductor layers 113 by using an electrical connection between the photosensitive dye and the semiconductor layers 113, reach the photoelectrodes 111 via the semiconductor layers 113, and are output via the photoelectrodes 111, thereby forming a driving current for driving an external circuit.

For example, the photosensitive dye absorbed by the semiconductor layers 113 includes molecules that absorb visual light and cause rapid movement of electrons to the semiconductor layers 113 in an excitation state due to light. The photosensitive dye may be in the form of a liquid, a gel that is a half-solid, and/or a solid. For example, in one embodiment, the photosensitive dye absorbed by the semiconductor layers 113 is a ruthenium (Ru)-based photosensitive dye. The photosensitive dye may be absorbed into the semiconductor layers 113 by dipping the light-receiving substrate 110 on which the semiconductor layers 113 are formed into a solution containing the photosensitive dye,

The electrolyte 150 may be a redox electrolyte including a pair of oxidant and reductant, and may be in the form of a solid, a gel and/or a liquid.

The counter substrate 120 facing the light-receiving substrate 110 does not particularly require transparency, but may be formed of a transparent material, e.g., the same material as the light-receiving substrate 110, such that the light VL is received from both sides to improve a photoelectric conversion efficiency. In particular, if the photoelectric conversion module 100 is used in building integrated photovoltaic (BIPV) equipment to be mounted on a structure such as a window frame, both sides of the photoelectric conversion module 100 may have transparency so as not to block the light VL that may enter from the outside.

The counter electrodes 121 function as positive electrodes of the photoelectric conversion module 100. The photosensitive dye absorbed by the semiconductor layers 113 absorbs the light VL such that electrons of the photosensitive dye are excited, and the excited electrons are output via the photoelectrodes 111. In addition, the photosensitive dye that loses the electrons is reduced by receiving electrons provided when the electrolyte 150 is oxidized, and the electrolyte 150 is reduced due to the electrons that reach the counter electrodes 121 via the external circuit, thereby completing a photoelectric conversion operation.

For example, in one embodiment, the counter electrodes 121 are formed of TCO having electrical conductivity and transparency, e.g., ITO, FTO and/or ATO. The counter electrodes 121 may further include metal electrodes having relatively high electrical conductivity, e.g., Au, Ag and/or Al electrodes. The metal electrodes are used to reduce the electrical resistance of the counter electrodes 121 and may be formed in a stripe pattern or a mesh pattern.

Catalyst layers 123 may be formed on the counter electrodes 121. The catalyst layers 123 are formed of a material functioning as a reduction catalyst for providing electrons, e.g., metal such as platinum (Pt), gold (Au), silver (Ag), copper (Cu) or aluminum (Al), metal oxide such as tin oxide (SnO), and/or a carbon (C)-based material such as graphite.

The sealing member 130 formed between the light-receiving substrate 110 and the counter substrate 120 maintains a certain distance between the light-receiving substrate 110 and the counter substrate 120, and defines the photoelectric cells S that are planarily arranged between the light-receiving substrate 110 and the counter substrate 120. Also, the sealing member 130 surrounds the electrolyte 150 injected into the photoelectric conversion module 100 so as to seal the electrolyte 150 in the photoelectric conversion module 100. The sealing member 130 may be formed of, for example, a thermosetting resin such as epoxy, a thermoplastic resin such as ionomer, and/or a photocurable resin such as UV curable epoxy.

The connection members 180 are disposed adjacent to the sealing member 130 so as to electrically connect the photoelectric cells S to each other. For example, the connection members 180 may be formed in spaces defined by the sealing member 130, and may penetrate the sealing member 130. The connection members 180 vertically extend so as to contact the photoelectrodes 111 and the counter electrodes 121, which are respectively formed on and under the connection members 180, connect the photoelectrodes 111 and the counter electrodes 121 between neighboring photoelectric cells S, and thus may connect the photoelectrodes 111 and the counter electrodes 121 to each other in series. The connection members 180 may be formed of a metallic material having relatively high conductivity and may be formed by, for example, filling a conductive paste in the spaces defined by the sealing member 130.

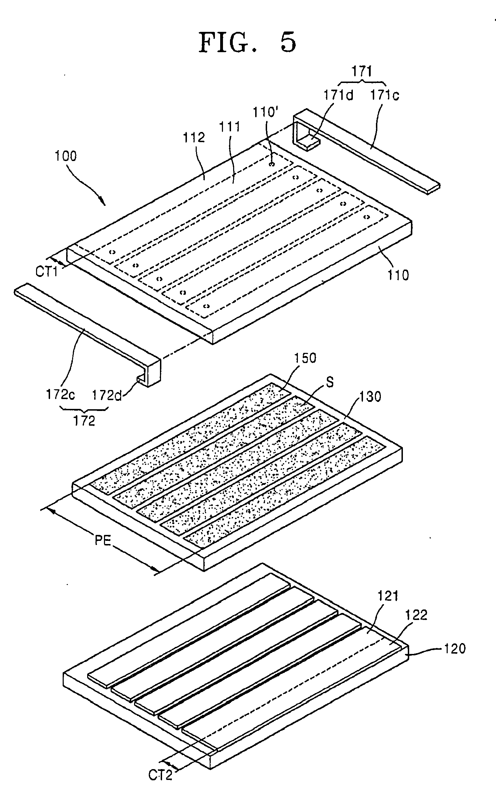

FIG. 5 is an exploded perspective view of the photoelectric conversion module 100 illustrated in FIG. 1. In the photoelectric conversion module 100, the light-receiving substrate 110 on which the photoelectrodes 111 are formed, and the counter substrate 120 on which the counter electrodes 121 are formed are disposed to face each other, the light-receiving substrate 110 and the counter substrate 120 are bonded to each other by intervening the sealing member 130 therebetween, and the electrolyte 150 is injected into the photoelectric cells S through, for example, the electrolyte inlets 110' formed in the light-receiving substrate 110.

According to an embodiment of the present invention, the electrolyte inlets 110' may be formed at two separate locations in a length direction of each photoelectric cell S. The first and second conductive sealing members 171 and 172 for sealing the electrolyte inlets 110' are disposed on the light-receiving substrate 110. Each of the first and second conductive sealing members 171 and 172 may extend across the light-receiving substrate 110, and may seal a row of the electrolyte inlets 110'. The first conductive sealing member 171 extends toward a corner portion (a corner) of the light-receiving substrate 110, is bent to surround the corner portion (e.g., an edge of the corner), and extends on a bottom surface of the light-receiving substrate 110. The second conductive sealing member 172 extends toward a diagonally opposite corner portion (a diagonally opposite corner) of the light-receiving substrate 110, is bent to surround the opposite corner portion (e.g., an edge of the opposite corner), and extends on the bottom surface of the light-receiving substrate 110.

The first current collecting terminal unit 112 that extends (protrudes) outside the sealing member 130 is formed on the light-receiving substrate 110. For example, the first current collecting terminal unit 112 may be a portion of the photoelectrodes 111 formed on the light-receiving substrate 110 and may integrally extend from the photoelectrodes 111. The first current collecting terminal unit 112 is connected to the first conductive sealing member 171. Output power generated due to photoelectric conversion may be output via the first current collecting terminal unit 112 and the first conductive sealing member 171. The first conductive sealing member 171 that is externally exposed on the light-receiving substrate 110 functions as a lead line for outputting the output power. As the first conductive sealing member 171 for sealing the electrolyte inlets 110' also functions as a lead line for transmitting the output power, the number of components may be reduced, and sealing of the electrolyte inlets 110' and forming of the lead line may be simultaneously performed with a single assembly step. Also, since the first conductive sealing member 171 is externally exposed on the light-receiving substrate 110, the photoelectric conversion module 100 may be easily mounted.

The second current collecting terminal unit 122 that extends (protrudes) outside the sealing member 130 is formed on the counter substrate 120. For example, in one embodiment, the second current collecting terminal unit 122 is a portion of the counter electrodes 121 formed on the counter substrate 120 and is integrally extended from the counter electrodes 121. The second current collecting terminal unit 122 is connected to the second conductive sealing member 172. Output power generated due to photoelectric conversion may be output via the second current collecting terminal unit 122 and the second conductive sealing member 172. As the second conductive sealing member 172 for sealing the electrolyte inlets 110' also functions as a lead line for transmitting the output power, the number of components may be reduced, and the photoelectric conversion module 100 may be easily mounted by using the second conductive sealing member 172 that is externally exposed on the light-receiving substrate 110.

A method of manufacturing the photoelectric conversion module 100, according to an embodiment of the present invention, will now be described with reference to FIGS. 5 through 7. Initially, as illustrated in FIG. 5, the light-receiving substrate 110 and the counter substrate 120 on which the photoelectrodes 111 and the counter electrodes 121 are respectively formed are prepared. The inlets 110' for injecting the electrolyte 150 are formed in the light-receiving substrate 110 or the counter substrate 120. For example, the electrolyte inlets 110' may be formed in the light-receiving substrate 110 to correspond to the photoelectric cells S. Although not shown in FIGS. 5 through 7, semiconductor layers 113 for receiving light and generating excited electrons and the catalyst layers 123 for performing catalysis may be further and respectively formed on the photoelectrodes 111 and the counter electrodes 121.

Then, the light-receiving substrate 110 and the counter substrate 120 are disposed to face each other, the sealing member 130 is interposed (intervened) between the light-receiving substrate 110 and the counter substrate 120, and a certain degree of heat or pressure is applied to bond the light-receiving substrate 110 and the counter substrate 120 to each other. The first current collecting terminal unit 112 is formed on a portion of the light-receiving substrate 110, which is exposed outside the sealing member 130, and the second current collecting terminal unit 122 is formed on a portion of the counter substrate 120, which is exposed outside the sealing member 130. The first and second current collecting terminal units 112 and 122 are respectively formed on the first and second terminal regions CT1 and CT2 that are opposite to each other with respect to the photoelectric region PE including the photoelectric cells S. According to an embodiment of the present invention, the first current collecting terminal unit 112 may be a portion of the photoelectrodes 111, which is exposed outside the sealing member 130, and the second current collecting terminal unit 122 may be a portion of the counter electrodes 121, which is exposed outside the sealing member 130.

Then, the electrolyte 150 is injected through the electrolyte inlets 110'. For example, the electrolyte 150 is injected through the electrolyte inlets 110' by using an appropriate injection element such as a syringe so as to fill spaces between the light-receiving substrate 110 and the counter substrate 120.

After the electrolyte 150 is completely injected, the electrolyte inlets 110' are sealed. In more detail, the first and second conductive sealing members 171 and 172 are disposed on the light-receiving substrate 110 so as to cover the electrolyte inlets 110'. The first and second conductive sealing members 171 and 172 may be assembled on the light-receiving substrate 110 so as to cover and seal different rows of the electrolyte inlets 110'. For example, in one embodiment, the first and second conductive sealing members 171 and 172 are bonded on the light-receiving substrate 110 around the electrolyte inlets 110'. The first and second conductive sealing members 171 and 172 may respectively include first and second sealing units 171 c and 172c extending along one direction in a stripe pattern, and first and second connection units 171d and 172d respectively formed at ends of the first and second sealing units 171 c and 172c and fitted around corner portions (edges of corners) of the light-receiving substrate 110 in the form of clips. For example, in the first and second conductive sealing members 171 and 172, the first and second sealing units 171 c and 172c are aligned on the electrolyte inlets 110' and the first and second connection units 171 d and 172d are assembled to be fitted around diagonally opposite corner portions of the light-receiving substrate 110.

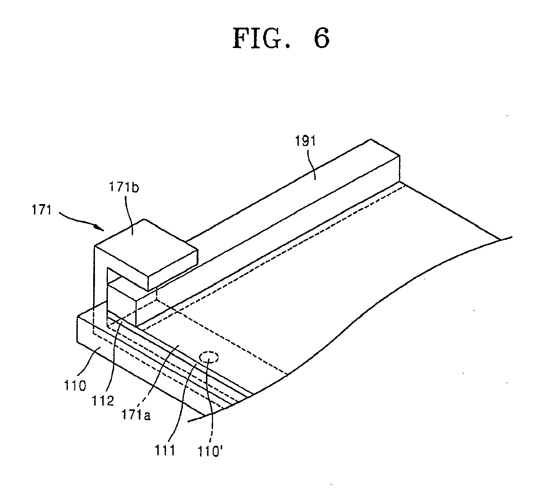

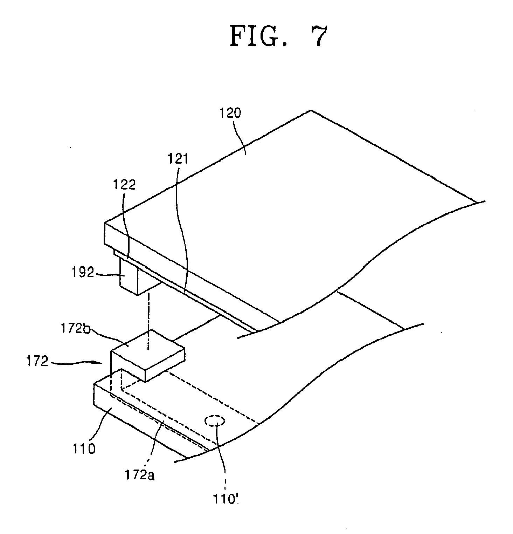

Then, the first and second conductive sealing members 171 and 172 are connected to the first and second current collecting terminal units 112 and 122. As illustrated in FIGS. 6 and 7, when the first and second conductive sealing members 171 and 172 are connected to the first and second current collecting terminal units 112 and 122, the first and second connection members 191 and 192, which may be in the form of anisotropic conductive films, may be interposed (intervened) therebetween so as to respectively and electrically connect the first and second conductive sealing members 171 and 172 to the first and second current collecting terminal units 112 and 122. For example, referring to FIG. 6, the first current collecting terminal unit 112 and the first connection unit 171 d and the first conductive sealing member 171 are electrically connected to each other by interposing (intervening) and pressing the first connection member 191 therebetween. Referring to FIG. 7, the second current collecting terminal unit 122 and the connection unit 172d of the second conductive sealing member 172 are electrically connected to each other by interposing (intervening) and pressing the second connection member 192 therebetween.

In a photoelectric conversion module according to an embodiment of the present invention, as a sealing member for sealing electrolyte inlets also functions as a lead line for outputting output power generated due to photoelectric conversion, the number of components is reduced, and sealing of the electrolyte inlets and forming of the lead line may be simultaneously performed with a single assembly step. Also, as a conductive sealing member is externally exposed on a substrate, connection with an external circuit may be simplified and the photoelectric conversion module may be easily mounted.

While the present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A photoelectric conversion module comprising:
a first substrate and a second substrate facing the first substrate, the first substrate having an electrolyte inlet;
a first electrode on the first substrate and a second electrode on the second substrate, the second electrode facing the first electrode;
an electrolyte injected through the electrolyte inlet in the first substrate, and filled between the first and second substrates; and
a first conductive sealing member for sealing the electrolyte inlet, which conductive sealing member is electrically connected to at least one of the first and second electrodes.

2. A photoelectric conversion module according to claim 1, wherein the first and second electrodes are between the first and second substrates, and
wherein the first conductive sealing member is configured to extend across an outer surface of the first substrate, to surround an edge of the first substrate, and to project between the first and second substrates.

3. A photoelectric conversion module according to claim 2, wherein the first conductive sealing member comprises:
a sealing unit extending across the first substrate to cover the electrolyte inlet; and
a connection unit at one end of the sealing unit that is bent to surround the said edge of the first substrate in a form of a clip.

4. A photoelectric conversion module according to any preceding claim, further comprising a further sealing member disposed between mutually-facing edge portions of the first and second substrates.

5. A photoelectric conversion module according to claim 4, wherein at least one of the first and second electrodes comprises a current collecting terminal unit protruding beyond the further sealing member, and is electrically connected to the first conductive sealing member via the current collecting terminal unit.

6. A photoelectric conversion module according to any preceding claim, wherein a plurality of photoelectric cells are situated between the first and second substrates, and
wherein a plurality of electrolyte inlets are located in the first substrate to correspond in position to the plurality of photoelectric cells, the plurality of electrolyte inlets comprising the said electrolyte inlet.

7. A photoelectric conversion module according to claim 6, wherein:
the first conductive sealing member seals a first row of the plurality of electrolyte inlets; and
the photoelectric conversion module further comprises
a second conductive sealing member that seals a second row of the plurality of electrolyte inlets.

8. A photoelectric conversion module according to claim 7, wherein the first conductive sealing member is electrically connected to the first electrode, and
wherein the second conductive sealing member is electrically connected to the second electrode.

9. A photoelectric conversion module according to claim 8 when directly or indirectly dependent upon claim 5
wherein the first and second electrodes respectively comprise first and second current collecting terminal units protruding beyond of the further sealing member.

10. A photoelectric conversion module of claim 9, wherein the first and second conductive sealing members are respectively and electrically connected to the first and second electrodes via the first and second current collecting terminal units.

11. A photoelectric conversion module according to claim 9 or 10, wherein the first and second current collecting terminal units are disposed at opposite sides of the sealing member.

12. A photoelectric conversion module according to claim 1, wherein the first conductive sealing member comprises a conductive layer and an adhesive layer, the conductive layer and the adhesive layer being stacked on one another.

13. A photoelectric conversion module according to claim 12, wherein the conductive layer is a thin metal plate.

14. A photoelectric conversion module according to claim 9 or any claim directly or indirectly dependent upon claim 9,
wherein the second conductive sealing member is configured to extend across the said outer surface of the first substrate and to surround an edge of the first substrate.

15. A photoelectric conversion module according to claim 14, wherein the second conductive sealing member comprises:
a sealing unit extending across the first substrate to cover at least one of the plurality of electrolyte inlets; and
a connection unit at one end of the sealing unit that is bent to surround the said edge of the first substrate in a form of a clip.

16. The photoelectric conversion module according to claim 7 or any claim dependent upon claim 7, wherein the second conductive sealing members comprises a conductive layer and an adhesive layer, the conductive layer and the adhesive layer being stacked on one another.
